# EUROPÄISCHE PATENTANMELDUNG

(11) **EP 3 909 709 A1**
(43) Veröffentlichungstag der Anmeldung: **17.11.2021**
(21) Anmeldenummer: 20174465.3
(22) Anmeldetag: 13.05.2020
(51) Int. Cl.: B23B 27/04, B23B 27/14, B23B 27/06

(54) **SCHNEIDEINSATZ, VERWENDUNG DAVON UND ZERSPANUNGSVERFAHREN**

(71) Anmelder: CERATIZIT Austria Gesellschaft m.b.H., 6600 Reutte (AT)
(72) Erfinder: Göberl, Christian, 6600 Reutte (AT)
(74) Vertreter: Ciesla, Dirk

(57) **Zusammenfassung**

Um einen Schneideinsatz (2, 201, 202, 203, 204, 205), welcher zur Erzeugung eines V-förmigen Profils (1002) in ein Werkstück (1000) durch radiales Einstechen bezüglich einer Werkstückdrehachse (1001) des Werkstücks (1000) ausgebildet ist, aufweisend eine Bezugsebene (100) und einen V-förmigen Einstechbereich (1, 101, 102, 103, 104), der V-förmige Einstechbereich (1, 101, 102, 103, 104) unter anderem aufweisend zwei in der Bezugsebene (100) enthaltende Schneidkanten (3, 4), eine Spanfläche (7) und mehrere längliche Spanleitvertiefungen (8, 8', 8", 80, 80', 80") in der Spanfläche (7), die sich jeweils parallel zu einer in der Bezugsebene (100) enthaltenden Vertiefungserstreckungsachse (10) erstrecken, anzugeben, der eine gegenüber dem Stand der Technik verbesserte Spanformung hat, wird vorgeschlagen, dass sich die Vertiefungserstreckungsachsen (10) jeweils unter einem Vertiefungsspanleitwinkel (12) im Bereich von 0° bis 45° erstrecken.

## Beschreibung

Die vorliegende Erfindung betrifft einen Schneideinsatz, welcher zur Erzeugung eines V-förmigen Profils in ein Werkstück durch radiales Einstechen bezüglich einer Werkstückdrehachse des Werkstücks ausgebildet ist, aufweisend eine Bezugsebene und einen V-förmigen Einstechbereich, der V-förmige Einstechbereich aufweisend zwei in der Bezugsebene enthaltende Schneidkanten, die in Blickrichtung senkrecht zur Bezugsebene V-förmig aufeinander zulaufen, einen Schneidkantenwinkel, der in Blickrichtung senkrecht zur Bezugsebene zwischen den Schneidkanten zu messen ist und im Bereich von 20° bis 60° liegt, eine in der Bezugsebene enthaltende Symmetrieachse bezüglich der die Schneidkanten spiegelsymmetrisch zueinander ausgebildet sind, eine Spanfläche, mehrere längliche Spanleitvertiefungen in der Spanfläche, die jeweils einen unterhalb der Bezugsebene liegenden Tiefpunkt aufweisen und sich in Blickrichtung senkrecht zur Bezugsebene jeweils parallel zu einer in der Bezugsebene enthaltenden Vertiefungserstreckungsachse erstrecken, und eine Schneidecke, über die die beiden Schneidkanten miteinander verbunden sind.

Die vorliegende Erfindung betrifft ferner eine Verwendung eines solchen Schneideinsatzes.

Schließlich betrifft die vorliegende Erfindung ein Zerspanungsverfahren, bei dem ein solcher Schneideinsatz bereitgestellt wird.

Ein Schneideinsatz der eingangs genannten Art wird insbesondere bei der Herstellung von Keilriemenscheiben aus dem Werkstück verwendet, indem der Schneideinsatz bezüglich der Werkstückdrehachse radial in das Werkstück eingestochen wird. Durch dieses Einstechen wird bei einer Drehung des Schneideinsatzes oder des Werkstücks um die Werkstückdrehachse eine V-förmige umlaufende Nut in dem Werkstück erzeugt, in die ein Keilriemen zum Antrieb einer solchermaßen hergestellten Keilriemenscheibe eingreifen kann.

Beim Einstechen entstehen jedoch üblicherweise lange Späne, wie zum Beispiel lange Wirrspäne. Dies ist problematisch, weil sich lange Späne häufig um das Werkstück oder den Schneideinsatz wickeln. Dadurch kommt es zu Prozessstörungen beim Einstechen und Beschädigungen am Schneideinsatz. Außerdem müssen lange Späne häufig manuell entfernt werden. Dies führt üblicherweise zu Maschinenstillstandzeiten, was die Produktivität verringert. Die Bildung von langen Spänen sollte folglich vermieden werden.

Der Schneideinsatz nach der EP 1 454 690 A1 weist daher eine Spanfläche mit einer Vertiefung auf, die sich entlang der Schneidkante erstreckt, um den Spanbruch zu begünstigen.

Es hat sich jedoch gezeigt, dass eine solchermaßen geformte Spanfläche keinen hinreichenden Spanbruch beim Einstechen von duktilen Werkstoffen bereitstellt.

Aufgabe der vorliegenden Erfindung ist es daher, jeweils einen Schneideinsatz, eine Verwendung des Schneideinsatzes und ein Zerspanungsverfahren mit jeweils einer gegenüber dem Stand der Technik verbesserten Spanformung anzugeben.

Die Aufgabe wird durch den Schneideinsatz nach Anspruch 1 gelöst. Vorteilhafte Weiterbildungen des Schneideinsatzes nach Anspruch 1 sind den von Anspruch 1 abhängigen Ansprüchen zu entnehmen.

Der Schneideinsatz, welcher zur Erzeugung eines V-förmigen Profils in ein Werkstück durch radiales Einstechen bezüglich einer Werkstückdrehachse des Werkstücks ausgebildet ist, weist eine Bezugsebene und einen V-förmigen Einstechbereich auf, der V-förmige Einstechbereich aufweisend zwei in der Bezugsebene enthaltende Schneidkanten, die in Blickrichtung senkrecht zur Bezugsebene V-förmig aufeinander zulaufen, einen Schneidkantenwinkel, der in Blickrichtung senkrecht zur Bezugsebene zwischen den Schneidkanten zu messen ist und im Bereich von 20° bis 60° liegt, eine in der Bezugsebene enthaltende Symmetrieachse bezüglich der die Schneidkanten spiegelsymmetrisch zueinander ausgebildet sind, eine Spanfläche, mehrere längliche Spanleitvertiefungen in der Spanfläche, die jeweils einen unterhalb der Bezugsebene liegenden Tiefpunkt aufweisen und sich in Blickrichtung senkrecht zur Bezugsebene jeweils parallel zu einer in der Bezugsebene enthaltenden Vertiefungserstreckungsachse erstrecken, und eine Schneidecke, über die die beiden Schneidkanten miteinander verbunden sind, wobei sich die Vertiefungserstreckungsachsen jeweils unter einem Vertiefungsspanleitwinkel im Bereich von 0° bis 45° erstrecken, wobei der Vertiefungsspanleitwinkel jeweils in Blickrichtung senkrecht zur Bezugsebene auf der Seite der Schneidecke zwischen der Symmetrieachse und der Vertiefungserstreckungsachse zu messen ist. Der Vorteil dieses Schneideinsatzes besteht darin, dass die Spanleitvertiefungen zur Spanformung dienen, die sich plastisch derart vollzieht, dass durch das Hineingleiten des Spanes in die jeweilige Spanleitvertiefung Sicken entlang der Längsachse des Spans im Span entstehen, die zu einer Spanversteifung führen, sodass der Span gegenüber dem Stand der Technik leichter brechen kann. Es hat sich gezeigt, dass diese positive Wirkung nicht mehr auftritt, wenn der Vertiefungsspanleitwinkel außerhalb des Bereichs von 0° bis 45° liegt.

Wenn der Vertiefungsspanleitwinkel 0° beträgt, erstrecken sich die Spanleitvertiefungen in Blickrichtung senkrecht zur Bezugsebene jeweils parallel zur Symmetrieachse. Wenn der Vertiefungsspanleitwinkel im Bereich größer 0° bis 45° liegt, erstrecken sich die Spanleitvertiefungen in Blickrichtung senkrecht zur Bezugsebene schräg zur Symmetrieachse.

Dass der Vertiefungsspanleitwinkel jeweils in Blickrichtung senkrecht zur Bezugsebene auf der Seite der Schneidecke zwischen der Symmetrieachse und der Vertiefungserstreckungsachse zu messen ist, bedeutet, dass der eine Schenkel des Vertiefungsspanleitwinkels ein Abschnitt der Vertiefungserstreckungsachse im Bereich der Spanleitvertiefung ist und der andere Schenkel des Vertiefungsspanleitwinkels jeweils ein Abschnitt der Symmetrieachse auf der Seite der Schneidecke ist.

Die beiden Schneidkanten können im Sinne der vorliegenden Offenbarung jeweils gerade, konvex oder konkav sein, wobei sie jeweils bezüglich der Symmetrieachse spiegelsymmetrisch zueinander ausgebildet sind.

Die Schneidecke kann in Blickrichtung senkrecht zur Bezugsebene punktförmig oder linienförmig sein. Wenn sie linienförmig ist, kann sie zum Beispiel kreisförmig, eiförmig oder polygonal sein.

Die Bezugsebene ist im Sinne der vorliegenden Offenbarung eine gedachte Ebene, in der die Schneidkanten enthalten sind.

Mit dem Begriff V-förmig ist die Form des Buchstabens V gemeint, wobei die Seiten des Vs gerade, konvex oder konkav sein können und die Spitze des Vs punktförmig oder linienförmig sein kann. Wenn sie linienförmig ist, kann sie zum Beispiel kreisförmig, eiförmig oder polygonal sein.

Gemäß einer Weiterbildung des Schneideinsatzes liegt der Vertiefungsspanleitwinkel im Bereich von 10° bis 40°. Es hat sich gezeigt, dass dieser engere Bereich zu einem noch kürzeren Spanbruch führt. Eine dahingehend weitere Verbesserung tritt im Bereich von 10° bis 20° auf. Am meisten bevorzugt ist der Bereich von 12° bis 18°.

Gemäß einer Weiterbildung des Schneideinsatzes sind in Blickrichtung senkrecht zur Bezugsebene mindestens zwei der Vertiefungserstreckungsachsen spiegelsymmetrisch zur Symmetrieachse angeordnet. Dadurch wird für jede der beiden Schneidkanten jeweils mindestens eine Spanleitvertiefung bereitgestellt, so dass den üblicherweise symmetrischen Schnittbedingungen beim Einstechen Rechnung getragen wird.

Gemäß einer Weiterbildung des Schneideinsatzes haben die Spanleitvertiefungen in Blickrichtung senkrecht zur Bezugsebene jeweils eine parallel zur Vertiefungserstreckungsachse bemessene maximale Länge und jeweils eine senkrecht zur Vertiefungserstreckungsachse bemessene maximale Breite, wobei das Verhältnis zwischen der Länge und der Breite jeweils im Bereich von 1,1 bis 20 liegt. Dies ist vorteilhaft, weil die Spanleitvertiefungen damit als längliche Rillen ausgebildet sind, die die Späne dementsprechend seitlich und in Spanablaufrichtung führen können. Es hat sich gezeigt, dass der Bereich von 1,1 bis 10 für diese Wirkung besonders gut geeignet ist. Am meisten bevorzugt ist der Bereich von 3 bis 8.

Gemäß einer Weiterbildung des Schneideinsatzes ist die Schneidecke in Blickrichtung senkrecht zur Bezugsebene linienförmig und hat eine in der Bezugsebene senkrecht zur Symmetrieachse bemessene maximale Schneideckenbreite, wobei in Blickrichtung senkrecht zur Bezugsebene die Spanleitvertiefungen einen parallel zur Symmetrieachse bemessenen Mindestabstand zu einem Schnittpunkt von der Schneidecke mit der Symmetrieachse einhalten, der um einen Faktor von 1 bis 3 größer ist als die Schneideckenbreite. Indem die Spanleitvertiefungen diesen Mindestabstand einhalten, können zwischen den Spanleitvertiefungen und der Schneidecke in Blickrichtung senkrecht zur Bezugsebene anders ausgeformte Spanleitvertiefung vorgesehen werden. Dies ist zweckmäßig, weil in einem solchermaßen in Blickrichtung senkrecht zur Bezugsebene definierten Schneideckenbereich gegenüber dem übrigen Bereich des V-förmigen Einstechbereichs andere Schnittbedingungen beim Einstechen vorherrschen, so dass eine daran angepasste Spanformung realisiert werden kann.

Gemäß einer Weiterbildung des Schneideinsatzes weist die Spanfläche mehrere Spanleiterhebungen auf, die sich jeweils nach oberhalb der Bezugsebene erstrecken und mit den Spanleitvertiefungen in Blickrichtung senkrecht zur Bezugsebene alternierend abwechselnd angeordnet sind. Die Spanleiterhebungen bieten aufgrund einer solchen Anordnung eine verbesserte Spanführung, die einem seitlichen Ausweichen der Späne beim Austritt aus der jeweiligen Spanleitvertiefung entgegenwirkt. Hierdurch kann der Span auf größere Radien bis zum Bruch aufgebogen werden.

Gemäß einer Weiterbildung des Schneideinsatzes sind die Spanleiterhebungen länglich und erstrecken sich in Blickrichtung senkrecht zur Bezugsebene jeweils parallel zu einer in der Bezugsebene enthaltenden Erhebungserstreckungsachse, wobei sich die Erhebungserstreckungsachsen jeweils unter einem Erhebungsspanleitwinkel im Bereich von 0° bis 45° erstrecken, wobei der Erhebungsspanleitwinkel jeweils in Blickrichtung senkrecht zur Bezugsebene auf der Seite der Schneidecke zwischen der Erhebungserstreckungsachse und der Symmetrieachse zu messen ist. Es hat sich gezeigt, dass dadurch die Spanführung noch weiter verbessert wird, weil die Späne aufgrund des Erhebungsspanleitwinkels im Bereich von 0° bis 45° noch weiter von der Schneidkante und dem Werkstück weggeführt werden. Der Erhebungsspanleitwinkel wird dem Vertiefungsspanleitwinkel analog gemessen. Vorzugsweise liegt der Erhebungsspanleitwinkel in einem engeren Bereich von im Bereich von 0° bis 40°, noch mehr bevorzugt im Bereich von 10° bis 20°, am meisten bevorzugt reicht der Bereich von 12° bis 18°.

Gemäß einer Weiterbildung des Schneideinsatzes sind die Spanleiterhebungen und die Spanleitvertiefungen in Blickrichtung senkrecht zur Bezugsebene alternierend abwechselnd angeordnet, wobei der Vertiefungsspanleitwinkel einer der Spanleitvertiefungen eine Differenz zu einem der Erhebungsspanleitwinkel hat, dieser Erhebungsspanleitwinkel zu einer Spanleiterhebung gehört, die der Spanleitvertiefung in Blickrichtung senkrecht zur Bezugsebene unmittelbar folgt, und die Differenz im Bereich von 0° bis 15° liegt. Es hat sich gezeigt, dass nach dieser Weiterbildung der Spanbruch noch mehr begünstigt wird und der ablaufende Span beim Austritt aus der Spanleitvertiefung in Richtung der Symmetrieachse von der Schneidecke weggeführt wird. Dieser Wirkung wird im engeren Bereich von größer 0° bis 15° verstärkt.

Gemäß einer Weiterbildung des Schneideinsatzes liegt der Schneidkantenwinkel im Bereich von 35° bis 45°. Dies ist für die Herstellung des V-förmigen Profils besonders zweckmäßig, weil das V-förmige Profil dann einen Öffnungswinkel zwischen den Seiten des Vs hat, der dem Schneidkantenwinkel aus diesem Bereich gleich ist, wobei der Öffnungswinkel dadurch einerseits hinreichend klein ist, was für die seitliche Führung eines Keilriemens vorteilhaft ist, und andererseits zu einer hinreichend großen Kontaktfläche für den Keilriemen innerhalb des V-förmigen Profils führt, was für eine reibschlüssige Kraftübertragung von dem Keilriemen auf das Werkstück vorteilhaft ist. Diese Wirkung wird im engeren Bereich von 38° bis 42° verstärkt.

Gemäß einer Weiterbildung des Schneideinsatzes hat mindestens eine der Spanleitvertiefungen eine ungeschliffene gesinterte Oberfläche. Ein solche Oberfläche hat gegenüber einer geschliffenen Oberfläche eine verbesserte Güte und/oder eine geringere Maßtoleranz, so dass eine noch präzisere Spanformung möglich ist. Die ungeschliffene gesinterte Oberfläche ist zum Beispiel durch Pressen eines pulverförmigen Ausgangsmaterials, welches anschließend gesintert wird, erhältlich. Die ungeschliffene gesinterte Oberfläche kann auch mit einer Hartstoffschicht beschichtet werden, was den Verschleiß des Schneideinsatzes reduziert.

Die Oberfläche der Spanfläche kann auch außerhalb von der mindestens einen Spanleitvertiefung, die eine ungeschliffene gesinterte Oberfläche hat, ungeschliffen und gesintert sein. Dies verbesserte die Güte und/oder verringert die Maßtoleranz der Spanfläche.

Jede der Schneidkanten verbindet die Spanfläche jeweils mit einer Freifläche. Mindestens eine der Freiflächen, vorzugsweise beide Freiflächen, weist eine ungeschliffene gesinterte Oberfläche auf. Dies verbesserte die Güte und/oder verringert die Maßtoleranz der Freifläche.

An dieser Stelle wird ausdrücklich festgehalten, dass es besonders vorteilhaft ist, wenn mindestens eine der Schneidkanten, vorzugsweise beide Schneidkanten, einen ununterbrochenen Verlauf aufweisen, indem die Spanleitvertiefungen in Blickrichtung senkrecht zur Bezugsebene von der Schneidkante bzw. den beiden Schneidkanten jeweils beabstandet sind. Diese Maßnahme verbessert die Schneidkantenstabilität. Ein jeweils senkrecht zur Schneidkante in Blickrichtung senkrecht auf die Bezugsebene bemessener Abstand zwischen jeweils der Spanleitvertiefung und der Schneidkante kann zum Beispiel im Bereich von 0,01 mm bis 0,1 mm liegen, vorzugsweise 0,01 mm bis 0,08 mm.

Gemäß einer Weiterbildung des Schneideinsatzes weist der Schneideinsatz mindestens einen zweiten V-förmigen Einstechbereich auf, der zweite V-förmige Einstechbereich aufweisend zwei in der Bezugsebene enthaltende Schneidkanten, die in Blickrichtung senkrecht zur Bezugsebene V-förmig aufeinander zulaufen, wobei die beiden Schneidkanten des zweiten V-förmigen Einstechbereichs den beiden Schneidkanten des ersten V-förmigen Einstechbereichs senkrecht zur Symmetrieachse unmittelbar folgend angeordnet sind. Dieser Schneideinsatz ist vorteilhaft, weil durch eine radiale Einstechbewegung mit diesem Schneideinsatz die für einen Keilrippenriemen benötigen mindestens zwei V-förmigen Profile in dem Werkstück erzeugt werden. Der zweite Einstechbereich weist üblicherweise eine Schneidecke auf, die der Schneidecke des ersten V-förmigen Einstechbereichs analog ausgebildet ist. Der zweite Einstechbereich ist vorzugsweise dem ersten Einstechbereich analog ausgebildet, so dass auch in und/oder an der Spanfläche des zweiten Einstechbereichs die vorteilhafte Spanformung des ersten Einstechbereichs bereitgestellt wird.

Denkbar und auch möglich ist es, dass drei, vier, fünf, sechs, sieben, acht, neun, zehn oder noch mehr V-förmige Einstechbereiche vorgesehen sind, wobei diese Einstechbereiche jeweils wie der erste oder zweite V-förmige Einstechbereich ausgebildet sind und dem jeweils vorherigen Einstechbereich senkrecht zur Symmetrieachse unmittelbar folgend angeordnet sind. Dies ist vorteilhaft, wenn eine Keilriemenscheibe mit mehr als zwei Nuten hergestellt werden soll.

Die Aufgabe wird auch durch eine Verwendung nach Anspruch 12 oder einem der von Anspruch 12 abhängigen Ansprüche gelöst, indem der Schneideinsatz nach Anspruch 1 oder einem der von Anspruch 1 abhängigen Ansprüche zum radialen Einstechen in ein Werkstück bezüglich einer Werkstückdrehachse des Werkstücks verwendet wird, wobei der Schneideinsatz oder das Werkstück um die Werkstückdrehachse gedreht wird. An dieser Verwendung ist vorteilhaft, dass der Schneideinsatz aufgrund seiner Spanleitvertiefungen, welche mit den optionalen Spanleiterhebungen zusammenwirken, der Bildung von langen Spänen, insbesondere Wirrspänen, entgegenwirkt.

Gemäß einer Weiterbildung der Verwendung des Schneideinsatzes stehen der Schneideinsatz und das Werkstück in axialer Richtung bezüglich der Werkstückdrehachse beim radialen Einstechen zueinander still. Es findet demnach beim radialen Einstechen keine Relativbewegung zwischen dem Schneideinsatz um dem Werkstück in axialer Richtung bezüglich der Werkstückdrehachse statt. Die Spanleitvertiefungen und die optionalen Spanleiterhebungen sind aufgrund ihrer Anordnung und Dimensionen für die Sickenbildung und Spanleitung weg von den Schneidkanten und dem Werkstück bei einem solchen radialen Einstechen besonders gut geeignet.

Die Aufgabe wird auch durch ein Zerspanungsverfahren nach Anspruch 14 oder einem der von Anspruch 14 abhängigen Ansprüche gelöst.

Bei dem Zerspanungsverfahren zur Erzeugung eines V-förmigen Profils in ein Werkstück werden die folgenden Schritte durchgeführt: a) Bereitstellen eines Werkstücks mit einer Werkstückdrehachse, b) Bereitstellen des Schneideinsatzes nach Anspruch 1 oder einem der von Anspruch 1 abhängigen Ansprüche, c) Drehen des Werkstücks oder des Schneideinsatzes um die Werkstückdrehachse, d) bezüglich der Werkstückdrehachse radiales Aufeinanderzubewegen des Werkstücks und des Schneideinsatzes, sodass die Schneidecke des Schneideinsatzes in das Werkstück zuerst eindringt, e) Fortsetzen des Aufeinanderzubewegens aus Schritt d), sodass die beiden Schneidkanten zumindest abschnittsweise in das Werkstück eindringen. An diesem Verfahren ist vorteilhaft, dass der Schneideinsatz aufgrund seiner Spanleitvertiefungen, welche mit den optionalen Spanleiterhebungen zusammenwirken, der Bildung von langen Spänen, insbesondere Wirrspänen, entgegenwirkt.

Gemäß einer Weiterbildung des Verfahrens stehen in Schritt e) der Schneideinsatz und das Werkstück in axialer Richtung bezüglich der Werkstückdrehachse zueinander still. Es findet demnach beim radialen Einstechen keine Relativbewegung zwischen dem Schneideinsatz um dem Werkstück in axialer Richtung bezüglich der Werkstückdrehachse statt. Es hat sich gezeigt, dass die Spanleitvertiefungen und die optional vorgesehenen Spanleiterhebungen aufgrund ihrer Anordnung und Dimensionen für die Sickenbildung und Spanleitung weg von den Schneidkanten und dem Werkstück bei einem solchen radialen Einstechen besonders gut geeignet sind.

Weitere Vorteile und Zweckmäßigkeiten der Erfindung ergeben sich anhand der nachfolgenden Beschreibung von Ausführungsbeispielen unter Bezugnahme auf die beigefügten Figuren.

Von den Figuren zeigen:
- Fig. 1:: eine schematische Darstellung eines vorderen Abschnitts von einem Schneideinsatz nach einer ersten Ausführungsform im Bereich eines V-förmigen Einstechbereichs in Blickrichtung senkrecht auf eine Bezugsebene;
- Fig. 2:: eine schematische Darstellung eines vorderen Abschnitts von einem Schneideinsatz nach einer zweiten Ausführungsform im Bereich eines V-förmigen Einstechbereichs in Blickrichtung senkrecht auf eine Bezugsebene;
- Fig. 3:: eine schematische Darstellung eines vorderen Abschnitts von einem Schneideinsatz nach einer dritten Ausführungsform im Bereich eines V-förmigen Einstechbereichs in Blickrichtung senkrecht auf eine Bezugsebene;
- Fig. 4:: eine schematische Darstellung eines vorderen Abschnitts von einem Schneideinsatz nach einer vierten Ausführungsform im Bereich eines V-förmigen Einstechbereichs in Blickrichtung senkrecht auf eine Bezugsebene;
- Fig. 5:: eine schematische Darstellung eines vorderen Abschnitts von einem Schneideinsatz nach einer fünften Ausführungsform im Bereich eines V-förmigen Einstechbereichs in Blickrichtung senkrecht auf eine Bezugsebene;
- Fig. 6:: die Darstellung aus Fig. 4 mit exemplarisch eingezeichneten Endlagen einer Erhebungserstreckungsachse;
- Fig. 7:: eine schematische Darstellung des kompletten Schneideinsatzes nach der fünften Ausführungsform mit zwei zueinander diametralen V-förmigen Einstechbereichen in Draufsicht auf einen die Einstechbereiche verbindenden Schaft;
- Fig. 8:: eine schematische Darstellung des vorderen Abschnitts von dem Schneideinsatz nach der fünften Ausführungsform im Bereich einer seiner zwei V-förmigen Einstechbereiche in Blickrichtung seitlich auf eine Freifläche;
- Fig. 9:: eine schematische Darstellung eines mit dem Schneideinsatz nach der fünften Ausführungsform durchgeführten Einstechverfahrens;
- Fig. 10:: eine schematische Darstellung eines mit einem Schneideinsatz nach einer sechsten Ausführungsform durchgeführten Einstechverfahrens;
- Fig. 11:: einen Span, der mit einem Schneideinsatz ohne Spanleitvertiefungen nach der vorliegenden Offenbarung erzeugt wurden;
- Fig. 12:: Späne, die mit dem Schneideinsatz nach der fünften Ausführungsform erzeugt wurden.

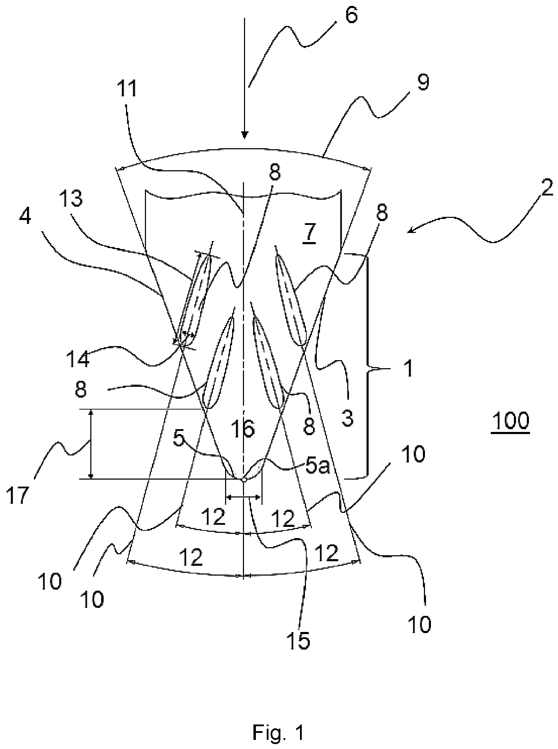

Der in Fig. 1 gezeigte V-förmige Einstechbereich 1 eines abschnittsweise dargestellten Schneideinsatzes 2 nach einer ersten Ausführungsform hat eine Bezugsebene 100, die mit der Zeichnungsebene von Fig. 1 zusammenfällt. Die in Fig. 1 gewählte Blickrichtung ist senkrecht zur Bezugsebene 100. In der Bezugsebene 100 sind zwei gerade Schneidkanten 3 und 4 des Einstechbereichs 1 enthalten. Die Schneidkanten 3 und 4 laufen V-förmig aufeinander zu, sind bezüglich einer in der Bezugsebene 100 enthaltenden Symmetrieachse 11 spiegelsymmetrisch zueinander ausgebildet und schließen in der Bezugsebene 100 einen Schneidkantenwinkel 9 ein. Der Schneidkantenwinkel 9 beträgt exemplarisch 40°.

Die Schneidkanten 3 und 4 sind über eine in der Bezugsebene 100 enthaltende abgerundete Schneidecke 5 miteinander verbunden. Eine Vorschubrichtung 6 ist üblicherweise radial zu einer Werkstückdrehachse eines metallischen Werkstücks orientiert. Wenn der Schneideinsatz 2 mit der Schneidecke 5 zuerst in das sich um die Werkstückdrehachse drehende Werkstück parallel zur Vorschubrichtung 6 in das Werkstück radial eingestochen wird und die Schneidkanten 3 und 4 dabei in das Werkstück eindringen, entsteht folglich in dem Werkstück ein Profil, das dem V-förmigen Profil des Einstechbereichs 1 folgend ausgebildet ist, also V-förmig mit einem Öffnungswinkel von 40° ist.

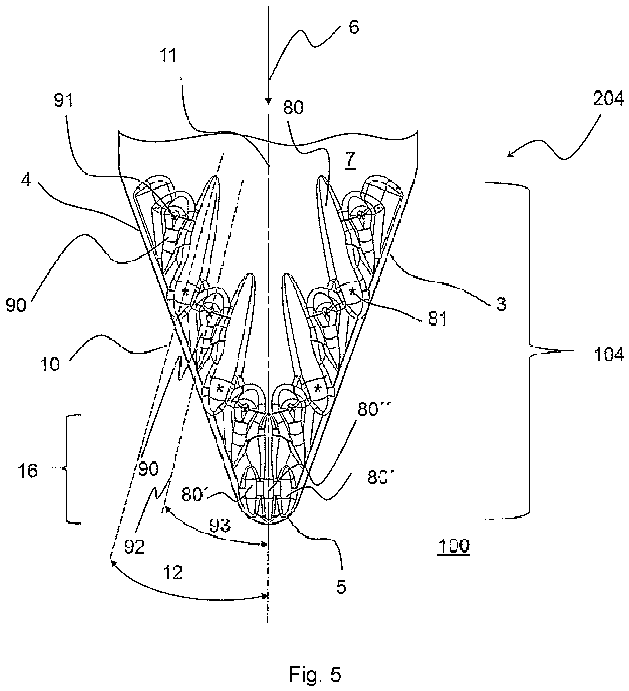

Bei einem solchen radialen Einstechen entstehen Späne. Die Späne laufen entlang einer Spanfläche 7 des Einstechbereichs 1 ab. Die Spanfläche 7 wird in der Bezugsebene 100 durch die Schneidkanten 3 und 4 sowie durch die Schneidecke 5 begrenzt. Die Spanfläche 7 weist tropfenförmige Spanleitvertiefungen 8 auf, die jeweils einen schneidkantennahen Tiefpunkt haben (vgl. dazu Fig. 5, wo die Tiefpunkte eingezeichnet sind). Die Tiefpunkte liegen unterhalb der Bezugsebene 100 bezüglich der in Fig. 1 gewählten Blickrichtung senkrecht zur Bezugsebene 100. Die Späne laufen jeweils in die Spanleitvertiefungen 8 hinein. Am jeweiligen Tiefpunkt werden die Späne gestaucht, sodass sich die Späne nach oberhalb aus der Bezugsebene 100 aufrollen. Beim Aufrollen brechen die Späne.

Die Form und Orientierung der Spanleitvertiefungen 8 wirken sich günstig darauf aus, dass den ablaufenden Spänen Sicken eingeprägt werden. Die Sicken wirken als Falzstellen und Sollbruchstellen, was das Aufrollen und das Brechen der Späne erleichtert.

So erstrecken sich die Spanleitvertiefungen 8 jeweils parallel zu einer in der Bezugsebene 100 enthaltenden Vertiefungserstreckungsachse 10. Die Vertiefungserstreckungsachsen 10 schließen mit der Symmetrieachse 11 jeweils einen Vertiefungsspanleitwinkel 12 ein, der auf der Seite der Schneidecke 5 zu messen ist und in der Bezugsebene 100 enthalten ist. Die Vertiefungsspanleitwinkel 12 betragen jeweils exemplarisch 15°.

Die Spanleitvertiefungen 8 haben jeweils eine parallel zu ihrer Vertiefungserstreckungsachse 10 bemessene maximale Länge 13 und eine senkrecht zu ihrer Vertiefungserstreckungsachse 10 bemessene maximale Breite 14. Das Verhältnis zwischen der maximalen Länge 13 zur maximalen Breite beträgt jeweils 5,4.

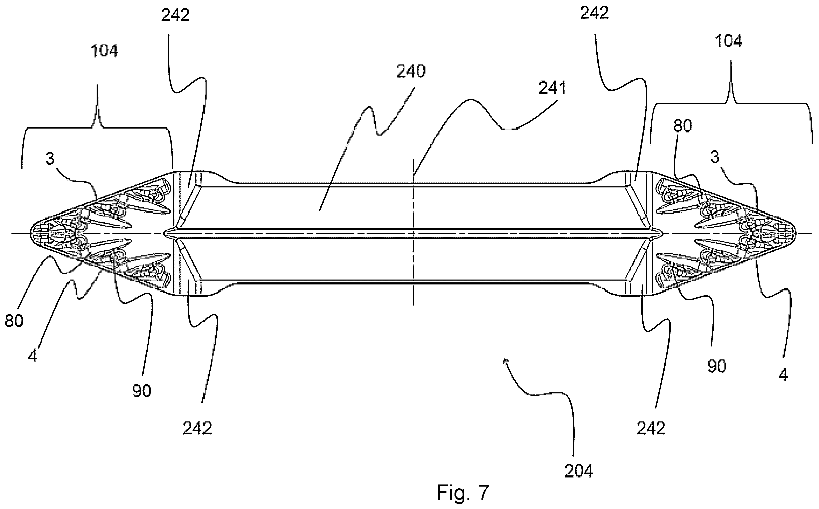

Es hat sich gezeigt, dass eine solchermaßen gewählte längliche Form der Spanleitvertiefungen 8 für die Spanführung weg von den Schneidkanten 3 und 4 und der Schneidecke 5 hin zu einer Anschlagfläche, auf die Bezug nehmend auf Fig. 7 näher eingegangen wird, vorteilhaft ist.

Die Schneidecke 5 hat am Übergang zu den Schneidkanten 3 und 4 eine in der Bezugsebene 100 senkrecht zur Symmetrieachse 11 bemessene maximale Breite 15. Von einem in der Bezugsebene 100 enthaltenden Schnittpunkt 5a der Schneidecke 5 mit der Symmetrieachse 11 erstreckt sich in der gewählten Blickrichtung aus Fig. 1 senkrecht zur Bezugsebene 100 zu den vorderen beiden Spanleitvertiefungen 8 ein vorderer Bereich 16 der Spanfläche 7. Der Bereich 16 hat eine in der Bezugsebene 100 parallel zur Symmetrieachse 11 bemessene maximale Länge 17. Das Verhältnis zwischen der maximalen Länge 17 zu der maximalen Breite 15 beträgt exemplarisch 2,3.

Es hat sich gezeigt, dass ein solchermaßen ausgeformter Bereich 16 für die Konstruktion des Schneideinsatzes 2 dahingehend vorteilhaft ist, dass in dem Bereich 16 weitere Spanleitvertiefungen 8 vorgesehen werden können, die gegenüber den in Fig. 1 dargestellten Spanleitvertiefungen 8 andere Vertiefungsspanleitwinkel und/oder Formen haben können. Denn die Spanbildungsbedingungen sind im Bereich 16 von den Spanbildungsbedingungen außerhalb davon verschieden.

Die Spanleitvertiefungen 8 sind in der aus Fig. 1 gewählten Blickrichtung senkrecht zur Bezugsebene 100 bezüglich der Symmetrieachse 11 paarweise spiegelsymmetrisch zueinander ausgebildet, weil die Spanbildungsbedingungen an den Schneidkanten 3 und 4 üblicherweise zueinander bezüglich der Symmetrieachse 11 symmetrisch sind. Die Vertiefungserstreckungsachsen 10 sind dementsprechend ebenfalls bezüglich der Symmetrieachse 11 symmetrisch in Blickrichtung senkrecht zur Bezugsebene 100.

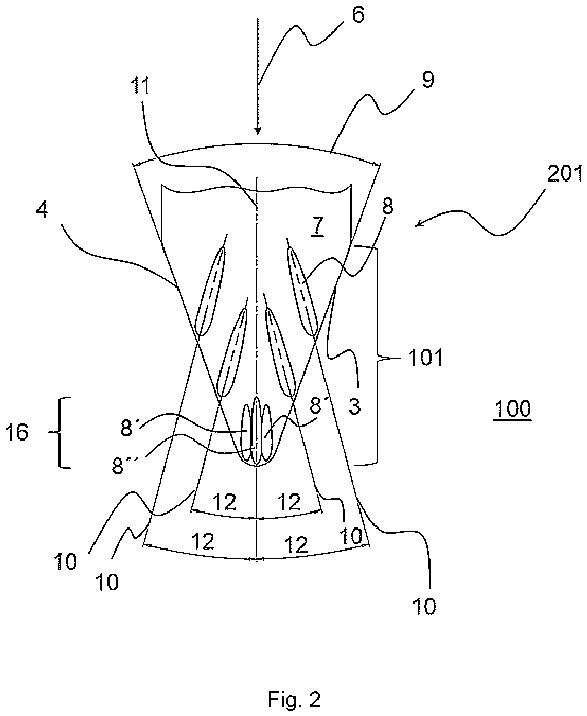

Der in Fig. 2 gezeigte V-förmige Einstechbereich 101 eines abschnittsweise dargestellten Schneideinsatzes 201 nach einer zweiten Ausführungsform ist dem Einstechbereich 1 analog ausgebildet mit dem Unterschied, dass in dem vorderen Bereich 16 der Spanfläche 7 drei zusätzliche Spanleitvertiefungen 8' und 8" vorhanden sind, die den anderen Spanleitvertiefungen 8 analog wirken, aber sich jeweils in Blickrichtung senkrecht zur Bezugsebene 100 entlang von - aus Gründen der Übersichtlichkeit nicht dargestellten - Vertiefungserstreckungsachsen erstrecken, die jeweils parallel zur Symmetrieachse 11 in der Bezugsebene 100 enthalten sind, also jeweils einen Vertiefungsspanleitwinkel von 0° haben. Es hat sich gezeigt, dass ein Vertiefungsspanleitwinkel von 0° für die Sickenbildung beim Spanablauf über die Spanfläche 7 in dem Bereich 16 optimal ist. Die in Blickrichtung senkrecht zur Bezugsebene 100 auf der Seite der Schneidkante 3 angeordnete vordere Spanleitvertiefung 8' ist bezüglich der Symmetrieachse 11 zu der auf der Seite der Schneidkante 4 angeordneten vorderen Spanleitvertiefung 8' spiegelsymmetrisch angeordnet und ausgebildet. Die mittlere der vorderen Spanleitvertiefungen 8" ist bezüglich der Symmetrieachse 11 spiegelsymmetrisch und parallel zu dieser Richtung bemessen länger als jede der Spanleitvertiefungen 8'.

Bezüglich der vorderen Spanleitvertiefungen 8' und 8" ist ihre analog zu den anderen Spanleitvertiefungen 8 bemessene maximale Länge jeweils kleiner als die maximale Länge 13 und ihre analog zu den anderen Spanleitvertiefungen 8 bemessene maximale Breite 14 jeweils kleiner. So hat die in Blickrichtung senkrecht zur Bezugsebene 100 mittlere der drei vorderen Spanleitvertiefungen 8" ein Verhältnis von 7,5 bezüglich ihrer maximalen Länge zu ihrer maximalen Breite. Die auf der Seite der Schneidkante 3 und die auf der Seite der Schneidkante 4 jeweils in Blickrichtung senkrecht zur Bezugsebene 100 angeordneten zwei anderen vorderen Spanleitvertiefungen 8' haben ein analog bemessenes Verhältnis von jeweils 5,8. Die solchermaßen ausgeformten Spanleitvertiefungen 8' und 8" wirken sich auf die Spanführung parallel zu Symmetrieachse 11 von der Schneidecke 5 weg günstig aus, so dass diese parallel zur Symmetrieachse 11 erfolgt.

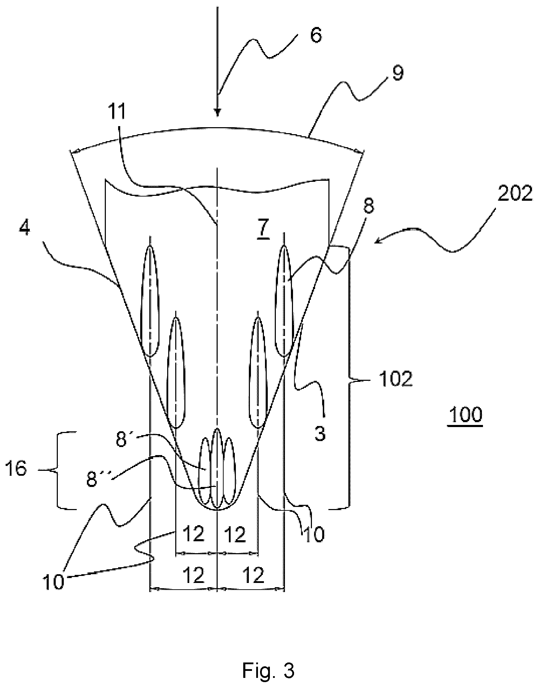

Der in Fig. 3 gezeigte V-förmige Einstechbereich 102 eines abschnittsweise dargestellten Schneideinsatzes 202 nach einer dritten Ausführungsform ist dem Einstechbereich 101 analog ausgebildet mit dem Unterschied, dass die Vertiefungserstreckungsachsen 10 jeweils einen Vertiefungsspanleitwinkel 12 von 0° haben, die Vertiefungserstreckungsachsen 10 also parallel zur Symmetrieachse 11 in der Bezugsebene 100 verlaufen. Es hat sich gezeigt, dass auch unter solchen Vertiefungsspanleitwinkeln 12 von 0° die Sickenbildung in den Spänen stattfindet. Der vordere Bereich 16 kann auch ohne Spanleitvertiefungen 8' und 8" ausgebildet sein.

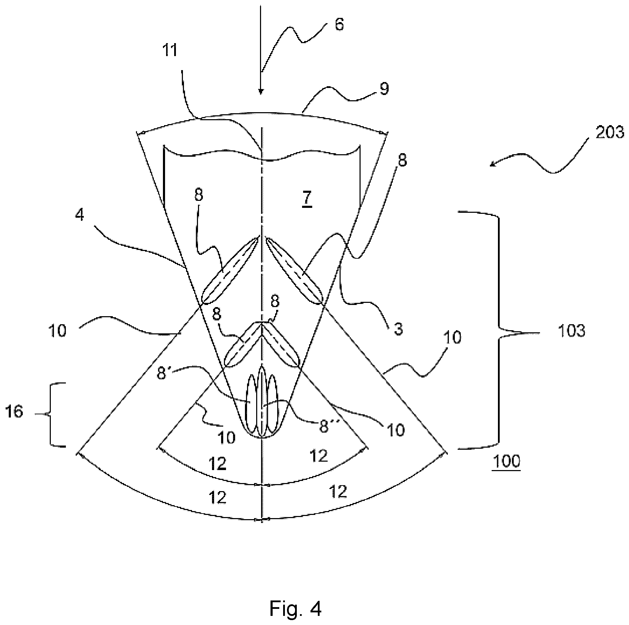

Der in Fig. 4 gezeigte V-förmige Einstechbereich 103 eines abschnittsweise dargestellten Schneideinsatzes 203 nach einer vierten Ausführungsform ist dem Einstechbereich 101 analog ausgebildet mit dem Unterschied, dass die Vertiefungserstreckungsachsen 10 jeweils einen Vertiefungsspanleitwinkel 12 von 40° haben. Es hat sich gezeigt, dass auch unter solchen Vertiefungsspanleitwinkeln 12 von 40° die Sickenbildung in den Spänen stattfindet. Der Bereich 16 des Einstechbereichs kann auch ohne Spanleitvertiefungen 8'und 8" ausgebildet sein.

Der in Fig. 5 gezeigte V-förmige Einstechbereich 104 eines abschnittsweise dargestellten Schneideinsatzes 204 nach einer fünften Ausführungsform ist dem Einstechbereich 101 analog ausgebildet, wobei Unterschiede bezüglich der Ausbildung der Spanfläche 7 bestehen.

Die Spanfläche 7 des Einstechbereichs 104 weist Spanleitvertiefungen 80 auf, die den Spanleitvertiefungen 8 analog wirken und deren Vertiefungserstreckungsachsen 10 jeweils mit der Symmetrieachse 11 in der Bezugsebene 100 auf der Seite der Schneidecke 5 den Vertiefungsspanleitwinkel 12 aufspannen. Der Vertiefungsspanleitwinkel 12 der Spanleitvertiefungen 80 beträgt wie bei den Spanleitvertiefungen 8 aus Fig. 2 jeweils 15°. Jede der Spanleitvertiefungen 80 weist jeweils einen Tiefpunkt 81 auf, der in Blickrichtung senkrecht zur Bezugsebene 100 unterhalb der Bezugsebene 100 liegt. Die Tiefpunkte 81 haben jeweils in Blickrichtung senkrecht zur Bezugsebene 100 einen parallel zur jeweiligen Vertiefungserstreckungsachse 10 bemessenen Abstand zur Schneidkante 3 bzw. 4, der 25 % von einer analog zur Länge 13 aus Fig. 1 bemessenen maximalen Länge der jeweiligen Spanleitvertiefungen 80 beträgt; die Tiefpunkte der Spanleitvertiefungen 8 nach den Fig. 1 bis 4 sind analog angeordnet. Die Spanformung erfolgt daher im Wesentlichen in der Schneidkantennähe.

Im Unterschied zu der Spanfläche 7 des Einstechbereichs 101 weist die Spanfläche 7 des Einstechbereichs 104 zusätzlich rippenförmige Spanleiterhebungen 90 auf, die sich jeweils nach oberhalb der Bezugsebene 100 bis zu einem jeweiligen Hochpunkt 91 erstrecken und auf die jeweilige Schneidkante 3 bzw. 4 in Blickrichtung senkrecht zur Bezugsebene 100 keilförmig zulaufen. Die Bezugsebene 100 liegt folglich zwischen den Hochpunkten 91 und den Tiefpunkten 81. Die Spanleiterhebungen 90 sind mit den Spanleitvertiefungen 80 entlang den Schneidkanten 3 und 4 jeweils alternierend abwechselnd angeordnet, sodass jede Spanleitvertiefung 80 zwischen zwei Spanleiterhebungen 90 angeordnet ist. Die solchermaßen angeordneten Spanleiterhebungen 90 verhindern ein seitliches Ausbrechen der Späne beim Austritt aus den Spanleitvertiefungen 80.

Die Spanleiterhebungen 90 erstrecken sich den Spanleitvertiefungen 80 analog jeweils parallel zur einer in Bezugsebene 100 enthaltenden Erhebungserstreckungsachse 92, die jeweils mit der Symmetrieachse 11 einen Erhebungsspanleitwinkel 93 auf der Seite der Schneidecke 5 einschließt, der jeweils kleiner ist als der Vertiefungsspanleitwinkel 12 einer unmittelbar benachbarten Spanleitvertiefung 80. Es hat sich gezeigt, dass eine solche Differenz den Spanbruch hin zu kürzeren Spänen beim Austritt aus den Spanleitvertiefungen 80 begünstigt. So betragen die Erhebungsspanleitwinkel 93 jeweils 12°. Die Differenz zwischen dem Vertiefungsspanleitwinkel 12 einer der Spanleitvertiefungen 80, die einer Spanleiterhebung 90 in Richtung entlang der Schneidkante 3 oder 4 unmittelbar folgt, und dem Erhebungsspanleitwinkel 93 von dieser Spanleiterhebung 90 beträgt folglich jeweils 3°.

Zwei vordere Spanleitvertiefungen 80' sind den Spanleitvertiefungen 8' analog ausgebildet. Eine zwischen den beiden Spanleitvertiefungen 80' in Blickrichtung senkrecht zur Bezugsebene 100 angeordnete Spanleitvertiefung 80" ist der Spanleitvertiefung 80' analog ausgebildet mit dem Unterschied, dass die Spanleitvertiefung 80" in Blickrichtung senkrecht zur Bezugsebene 100 sowie zur Symmetrieachse 11 nach innen verengt ausgebildet ist, was den Spanbruch in diesem Bereich begünstigt.

Anhand der Profillinien in Fig. 5 ist zu erkennen, dass die Spanleitvertiefungen 80, 80' und 80" sowie die Spanleiterhebungen 90 jeweils facettiert ausgebildet sind, wie dies durch direktes Pressen eines pulverförmigen Rohkörpers des Schneideinsatzes 204 und anschließende Sinterung erhältlich ist. Die Spanfläche 7 ist dabei ungeschliffen.

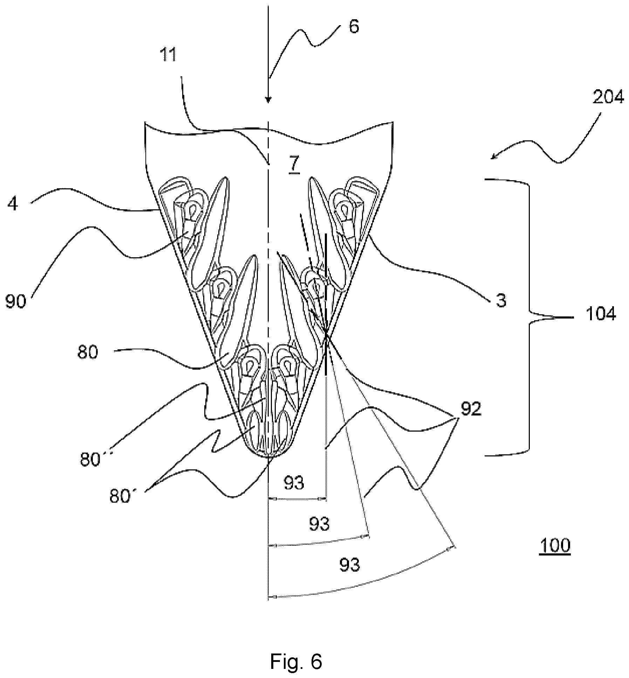

In Fig. 6 ist zu erkennen, dass der Erhebungsspanleitwinkel 93 gemäß den dargestellten Endlagen der Erhebungserstreckungsachse 92 im Bereich von 0° (parallel zur Symmetrieachse 11) bis 31° liegen kann; denkbar und auch möglich ist aber auch ein alternativer Bereich des Erhebungsspanleitwinkels 93 von 0° bis 40°. In analoger Weise zeigen die Fig. 1 bis 4 in einer Zusammenschau, dass der Vertiefungsspanleitwinkel 12 im Bereich von 0° bis 40°, 0° bis 15° und 15° bis 40° jeweils liegen kann. Die jeweils offenbarten Bereiche des Erhebungsspanleitwinkels 93 (0° bis 31°, 31° bis 40° und 0° bis 40°) können jeweils mit einem der offenbarten Bereiche des Vertiefungsspanleitwinkels 12 (0° bis 40°, 0° bis 15° und 15° bis 40°) kombiniert werden, sofern der Erhebungsspanleitwinkel 93 kleiner ist als der Vertiefungsspanleitwinkel 12. Wie sich gezeigt ist, wird mit einer solchen Kombination der Spanbruch begünstigt.

Fig. 7 zeigt den kompletten Schneideinsatz 204 in einer Draufsicht. Der Schneideinsatz 204 weist einen Schaft 240 auf, über den der Schneideinsatz 204 in einem Werkzeughalter eingespannt werden kann. Der Schneideinsatz 204 weist den Einstechbereich 104 zweimal auf, und zwar an gegenüberliegenden Enden des Schafts 240 diametral sowie bezüglich einer Symmetrieachse 241 des Schafts 240 äquidistant zueinander. Folglich kann wahlweise der eine oder der andere Einstechbereich 104 zum Einstechen verwendet werden, indem der Schneideinsatz 204 um eine Drehachse, die senkrecht zur Zeichnungsebene von Fig. 7 steht, um 180° gedreht wird.

In Fig. 7 ist außerdem erkennbar, dass der Schneideinsatz 204 jeweils auf der Seite der Schneidkanten 3 und 4 eine Anschlagfläche 242 aufweist. Die Spanleitleitvertiefungen 80 und Spanleiterhebungen 90 sind so orientiert, dass die Späne nach den Anschlagflächen 242 geführt werden. Wenn die Späne aufgrund einer solchermaßen realisierten Führung mit den Anschlagflächen 242 kollidieren, wird der Spanbruch zusätzlich begünstigt. Daher trägt auch die Spanführung zum Spanbruch bei.

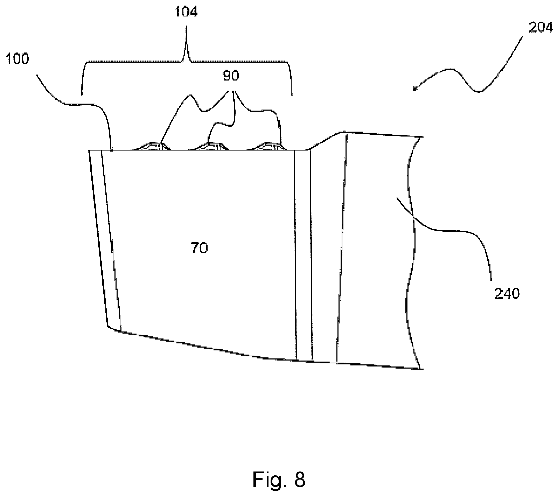

In der Fig. 8 gezeigten Seitenansicht in Blickrichtung parallel zur Bezugsebene 100 auf eine Freifläche 70 des Einstechbereichs 104 ist besonders gut zu erkennen, dass sich die Spanleiterhebungen 90 nach oberhalb der Bezugsebene 100 erstrecken und auf diese Weise ein seitliches Ausbrechen Späne verhindern.

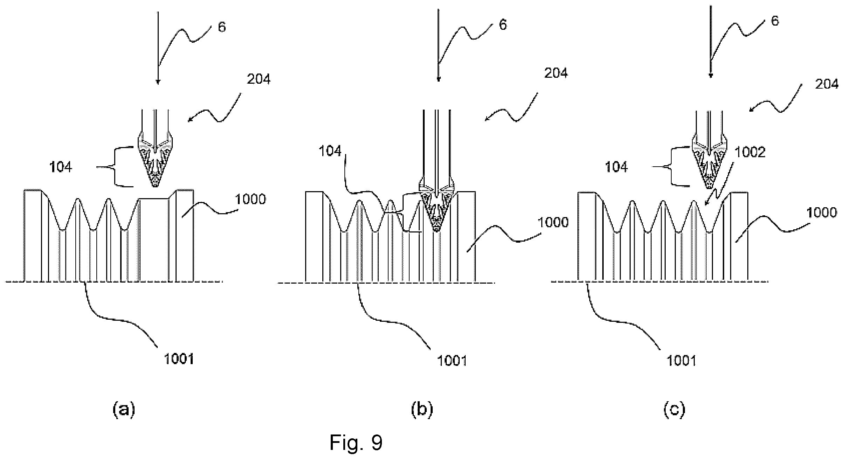

Fig. 9a bis 9c zeigen den Schneideinsatz 204 abschnittsweise im Bereich des Einstechbereichs 104 beim Einstechen in ein Werkstück 1000. So zeigt Fig. 9a den Einstechbereich 104 in einer Position, während dieser auf das Werkstück 1000 senkrecht (radial) in der Richtung 6 zu einer Werkstückdrehachse 1001 des Werkstücks 1000 bewegt wird. Das Werkstück 1000 dreht sich in den Fig. 9a bis 9c um die Werkstückdrehachse 1001; denkbar und möglich ist es aber auch, dass das Werkstück 1000 stillsteht und der Einstechbereich 104 und damit der Schneideinsatz 204 um die Werkstückdrehachse 1001 gedreht werden. Fig. 9b zeigt den Einstechbereich 104, während dieser in das Werkstück 1001 einsticht. Fig. 9c zeigt den Einstechbereich 104, nachdem dieser entgegengesetzt zur Richtung 6 aus dem Werkstück 1000 herausbewegt wurde. Wie in Fig. 9c ersichtlich ist, wurde durch das Einstechen in dem Werkstück 1001 ein V-förmiges Profil 1002 erzeugt; dieses kann auch als V-förmige Nut 1002 bezeichnet werden, die bezüglich der Drehachse 1001 umlaufend ist, weil das Werkstück 1000 während der Einstechposition gemäß Fig. 9b eine vollständige Umdrehung um die Drehachse 10001 durchgeführt hat. Durch das Werkstück 1000 wird sonach in Fig. 9c eine Keilriemenscheibe bereitgestellt, in welche ein dem V-Profil 1002 im Querschnitt folgender Keilriemen eingreifen kann.

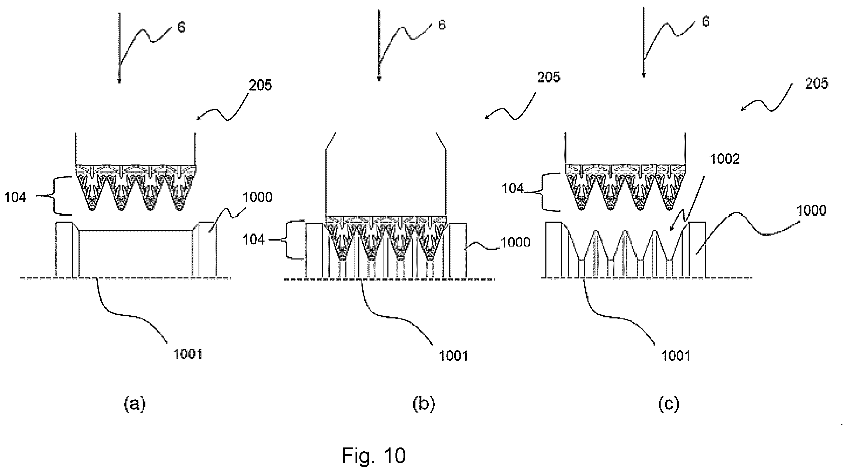

Fig. 10a bis 10c zeigen einen Schneideinsatz 205 nach einer sechsten Ausführungsform abschnittsweise im Bereich seines vierfachen Einstechbereichs 104 beim Einstechen in das Werkstück 1000 analog zu den Fig. 9a bis 9c. Die einzelnen Einstechbereiche 104 sind Bezug nehmend auf Fig. 5 in der Bezugsebene 100 senkrecht zur Symmetrieachse 11 nebeneinander angeordnet, so dass durch einen Einstechvorgang gemäß den Fig. 10a bis 10c vier der V-förmigen Profile 1002 in dem Werkstück 1000 durch einen Einstechvorgang erzeugt werden.

Beim Einstechen gemäß den Fig. 9a bis 9c und Fig. 10a bis 10c steht das Werkstück 1000 üblicherweise gegenüber dem Schneideinsatz 204 bzw. 205 bezüglich einer axialen Vorschubrichtung, die in der jeweiligen Zeichnungsebene senkrecht zur Richtung 6 enthalten ist, still. Alternativ ist es denkbar und auch möglich, dass jeweils eine Relativbewegung in einer solchen axialen Richtung stattfindet, um die V-förmigen Profile in diese Richtung aufzuweiten.

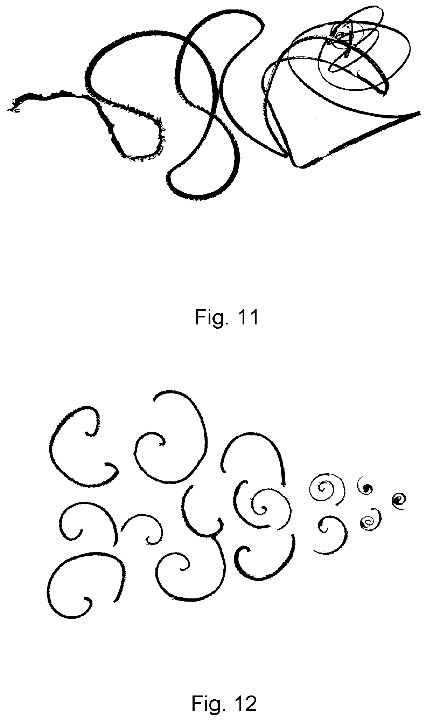

Die Wirkung des Schneideinsatzes 204 und damit des Einstechbereichs 104 wird aus einem Vergleich der Fig. 11 und Fig. 12 erkennbar. So kommt es nach Fig. 11 beim radialen Einstechen analog zu den Fig. 9a bis 9c unter Verwendung eines herkömmlichen Schneideinsatzes, der keine Spanleitvertiefungen und Spanleiterhebungen im Sinne der vorliegenden Offenbarung aufweist, zur Bildung von relativ langen Wirrspänen. Es findet folglich kein Spanbruch hin zu kürzeren Spänen statt. Aus Fig. 12 ist hingegen erkennbar, dass es bei der Verwendung des Schneideinsatzes 204 analog zu den Fig. 9a bis 9c aufgrund der Spanleitvertiefungen 80 und Spanleiterhebungen 90 zu der gewünschten Kurzspanbildung kommt.

## Patentansprüche

1. Schneideinsatz (2, 201, 202, 203, 204, 205), welcher zur Erzeugung eines V-förmigen Profils (1002) in ein Werkstück (1000) durch radiales Einstechen bezüglich einer Werkstückdrehachse (1001) des Werkstücks (1000) ausgebildet ist, aufweisend eine Bezugsebene (100) und einen V-förmigen Einstechbereich (1, 101, 102, 103, 104), der V-förmige Einstechbereich (1, 101, 102, 103, 104) aufweisend zwei in der Bezugsebene (100) enthaltende Schneidkanten (3, 4), die in Blickrichtung senkrecht zur Bezugsebene (100) V-förmig aufeinander zulaufen, einen Schneidkantenwinkel (9), der in Blickrichtung senkrecht zur Bezugsebene (100) zwischen den Schneidkanten (3, 4) zu messen ist und im Bereich von 20° bis 60° liegt, eine in der Bezugsebene (100) enthaltende Symmetrieachse (11) bezüglich der die Schneidkanten (3, 4) spiegelsymmetrisch zueinander ausgebildet sind, eine Spanfläche (7), mehrere längliche Spanleitvertiefungen (8, 8', 8", 80, 80', 80") in der Spanfläche (7), die jeweils einen unterhalb der Bezugsebene (100) liegenden Tiefpunkt (81) aufweisen und sich in Blickrichtung senkrecht zur Bezugsebene (100) jeweils parallel zu einer in der Bezugsebene (100) enthaltenden Vertiefungserstreckungsachse (10) erstrecken, und eine Schneidecke (5), über die die beiden Schneidkanten (3, 4) miteinander verbunden sind, **dadurch gekennzeichnet, dass** sich die Vertiefungserstreckungsachsen (10) jeweils unter einem Vertiefungsspanleitwinkel (12) im Bereich von 0° bis 45° erstrecken, wobei der Vertiefungsspanleitwinkel (12) jeweils in Blickrichtung senkrecht zur Bezugsebene (100) auf der Seite der Schneidecke (5) zwischen der Symmetrieachse (11) und der Vertiefungserstreckungsachse (10) zu messen ist.

2. Schneideinsatz (2, 201, 202, 203, 204, 205) nach Anspruch 1, **dadurch gekennzeichnet, dass** der Vertiefungsspanleitwinkel (12) im Bereich von 10° bis 40° liegt.

3. Schneideinsatz (2, 201, 202, 203, 204, 205) nach einem der vorherigen Ansprüche, **dadurch gekennzeichnet, dass** in Blickrichtung senkrecht zur Bezugsebene (100) mindestens zwei der Vertiefungserstreckungsachsen (10) spiegelsymmetrisch zur Symmetrieachse (11) angeordnet sind.

4. Schneideinsatz (2, 201, 202, 203, 204, 205) nach einem der vorherigen Ansprüche, **dadurch gekennzeichnet, dass** die Spanleitvertiefungen (8, 8', 8", 80, 80', 80") in Blickrichtung senkrecht zur Bezugsebene (100) jeweils eine parallel zur Vertiefungserstreckungsachse (10) bemessene maximale Länge (13) haben und jeweils eine senkrecht zur Vertiefungserstreckungsachse (10) bemessene maximale Breite (14) haben, wobei das Verhältnis zwischen der Länge (13) und Breite (14) jeweils im Bereich von 1,1 bis 20 liegt.

5. Schneideinsatz (2, 201, 202, 203, 204, 205) nach einem der vorherigen Ansprüche, **dadurch gekennzeichnet, dass** die Schneidecke (5) in Blickrichtung senkrecht zur Bezugsebene (100) linienförmig ist und eine in der Bezugsebene (100) senkrecht zur Symmetrieachse (11) bemessene maximale Schneideckenbreite (15) hat, wobei in Blickrichtung senkrecht zur Bezugsebene (100) die Spanleitvertiefungen (8, 8', 8", 80, 80', 80") einen parallel zur Symmetrieachse (11) bemessenen Mindestabstand (17) zu einem Schnittpunkt (5a) von der Schneidecke (5) mit der Symmetrieachse (11) einhalten, der um einen Faktor von 1 bis 3 größer ist als die Schneideckenbreite (15).

6. Schneideinsatz (2, 201, 202, 203, 204, 205) nach einem der vorherigen Ansprüche, **dadurch gekennzeichnet, dass** die Spanfläche (7) mehrere Spanleiterhebungen (90) aufweist, die sich jeweils nach oberhalb der Bezugsebene (100) erstrecken und mit den Spanleitvertiefungen (8, 8', 8", 80, 80', 80") in Blickrichtung senkrecht zur Bezugsebene (100) alternierend abwechselnd angeordnet sind.

7. Schneideinsatz (2, 201, 202, 203, 204, 205) nach Anspruch 6, **dadurch gekennzeichnet, dass** die Spanleiterhebungen (90) länglich sind und sich in Blickrichtung senkrecht zur Bezugsebene (100) jeweils parallel zu einer in der Bezugsebene (100) enthaltenden Erhebungserstreckungsachse (92) erstrecken, wobei sich die Erhebungserstreckungsachsen (92) jeweils unter einem Erhebungsspanleitwinkel (93) im Bereich von 0° bis 45° erstrecken, wobei der Erhebungsspanleitwinkel (93) jeweils in Blickrichtung senkrecht zur Bezugsebene (100) auf der Seite der Schneidecke (5) zwischen der Erhebungserstreckungsachse (92) und der Symmetrieachse (11) zu messen ist.

8. Schneideinsatz (2, 201, 202, 203, 204, 205) nach Anspruch 7, **dadurch gekennzeichnet, dass** die Spanleiterhebungen (90) und die Spanleitvertiefungen (8, 8', 8", 80, 80', 80") in Blickrichtung senkrecht zur Bezugsebene (100) alternierend abwechselnd angeordnet sind, wobei der Vertiefungsspanleitwinkel (12) einer der Spanleitvertiefungen (8, 8', 8", 80, 80', 80") eine Differenz zu einem der Erhebungsspanleitwinkel (93) hat, dieser Erhebungsspanleitwinkel (93) zu einer Spanleiterhebung (90) gehört, die der Spanleitvertiefung (8, 8', 8", 80, 80', 80") in Blickrichtung senkrecht zur Bezugsebene (100) unmittelbar folgt, und die Differenz im Bereich von 0° bis 15° liegt.

9. Schneideinsatz (2, 201, 202, 203, 204, 205) nach einem der vorherigen Ansprüche, **dadurch gekennzeichnet, dass** der Schneidkantenwinkel (9) im Bereich von 35° bis 45° liegt.

10. Schneideinsatz (2, 201, 202, 203, 204, 205) nach einem der vorherigen Ansprüche, **dadurch gekennzeichnet, dass** mindestens eine der Spanleitvertiefungen (8, 8', 8", 80, 80', 80") eine ungeschliffene gesinterte Oberfläche hat.

11. Schneideinsatz (2, 201, 202, 203, 204, 205) nach einem der vorherigen Ansprüche, **dadurch gekennzeichnet, dass** der Schneideinsatz (2, 201, 202, 203, 204, 205) mindestens einen zweiten V-förmigen Einstechbereich (1, 101, 102, 103, 104) aufweist, der zweite V-förmige Einstechbereich (1, 101, 102, 103, 104) aufweisend zwei in der Bezugsebene (100) enthaltende Schneidkanten (3, 4), die in Blickrichtung senkrecht zur Bezugsebene (100) V-förmig aufeinander zulaufen, wobei die beiden Schneidkanten (3, 4) des zweiten V-förmigen Einstechbereichs (1, 101, 102, 103, 104) den beiden Schneidkanten (3, 4) des ersten V-förmigen Einstechbereichs (1, 101, 102, 103, 104) senkrecht zur Symmetrieachse (11) unmittelbar folgend angeordnet sind.

12. Verwendung des Schneideinsatzes (2, 201, 202, 203, 204, 205) nach einem der Ansprüche 1 bis 11, wobei der Schneideinsatz (2, 201, 202, 203, 204, 205) zum radialen Einstechen in ein Werkstück (1000) bezüglich einer Werkstückdrehachse (1001) des Werkstücks (1000) verwendet wird, wobei der Schneideinsatz (2, 201, 202, 203, 204, 205) oder das Werkstück (1000) um die Werkstückdrehachse (1001) gedreht wird.

13. Verwendung nach Anspruch 12, wobei der Schneideinsatz (2, 201, 202, 203, 204, 205) und das Werkstück (1000) in axialer Richtung bezüglich der Werkstückdrehachse (1001) beim radialen Einstechen zueinander stillstehen.

14. Zerspanungsverfahren zur Erzeugung eines V-förmigen Profils (1002) in ein Werkstück (1000), wobei die folgenden Schritte durchgeführt werden: a) Bereitstellen eines Werkstücks (1000) mit einer
Werkstückdrehachse (1001), b) Bereitstellen des Schneideinsatzes (2, 201, 202, 203, 204, 205) nach einem der Ansprüche 1 bis 11, c) Drehen des Werkstücks (1000) oder des Schneideinsatzes (2, 201, 202, 203, 204, 205) um die Werkstückdrehachse, d) bezüglich der Werkstückdrehachse (1001) radiales Aufeinanderzubewegen des Werkstücks (1000) und des Schneideinsatzes (2, 201, 202, 203, 204, 205), sodass die Schneidecke (5) des Schneideinsatzes (2, 201, 202, 203, 204, 205) in das Werkstück (1000) zuerst eindringt, e) Fortsetzen des Aufeinanderzubewegens aus Schritt d), sodass die beiden Schneidkanten (3, 4) zumindest abschnittsweise in das Werkstück (1000) eindringen.

15. Zerspanungsverfahren nach Anspruch 14, wobei in Schritt e) der Schneideinsatz (2, 201, 202, 203, 204, 205) und das Werkstück (1000) in axialer Richtung bezüglich der Werkstückdrehachse (1001) zueinander stillstehen.
